# EUROPÄISCHE PATENTSCHRIFT

(11) **EP 4 102 119 B1**
(45) Veröffentlichungstag und Bekanntmachung des Hinweises auf die Patenterteilung: **11.09.2024**
(21) Anmeldenummer: 21179044.9
(22) Anmeldetag: 11.06.2021
(51) Int. Cl.: F16K 31/05, H02K 7/00, E03B 9/08

(54) **VORRICHTUNG ZUM BEDIENEN EINER ARMATUR IN EINER VERSORGUNGSLEITUNG UND ANORDNUNG**
DEVICE FOR OPERATING A FITTING IN A SUPPLY LINE AND ARRANGEMENT
DISPOSITIF DE FONCTIONNEMENT D'UNE ARMATURE DANS UNE CONDUITE D'ALIMENTATION ET AGENCEMENT

(43) Veröffentlichungstag der Anmeldung: 14.12.2022
(73) Patentinhaber: Sacharowitz, Axel, 12307 Berlin (DE); Sacharowitz, Fabian, 12307 Berlin (DE); Sacharowitz, Steffen, 12307 Berlin (DE)
(72) Erfinder: Bohle, Daniel, 10629 Berlin (DE)
(74) Vertreter: Bittner, Thomas L.

(56) Entgegenhaltungen:
- EP-A1- 2 716 948
- EP-A2- 1 002 943
- WO-A1-2021/069037
- CN-A- 107 387 842
- CN-Y- 2 906 255
- US-A1- 2019 331 203

## Beschreibung

Die Erfindung betrifft eine Vorrichtung zum Bedienen einer Armatur in einer Versorgungsleitung sowie eine Anordnung.

### Hintergrund

Versorgungsleitungen dienen zum Transport unterschiedlicher Medien, beispielsweise Gas, Öl, Wasser und Abwasser, und können als erdverlegte oder oberirdisch verlaufende Leitung ausgeführt werden. Zu solchen Versorgungsleitungen gehören beispielsweise auch Fernwärmeleitungen. Armaturen in einer Versorgungsleitung ermöglichen insbesondere das Öffnen und das Schließen von Durchgängen in den Rohrleitungen der Versorgungsleitung. Die Armatur kann hierbei in einer Versorgungsleitung oberirdisch installiert sein. In einer anderen Ausgestaltung kann die Armatur in einer erdverlegten Versorgungsleitung im Erdeinbau angeordnet sein, also unterhalb der Erdoberfläche. Alternativ kann vorgesehen sein, die Armatur in einem Schachtbauwerk zu installieren oder einen (ggf. eher kurzen) Abschnitt der Rohrleitung der erdverlegten Versorgungsleitung oberirdisch anzuordnen, zum Beispiel in einem Pumpwerk.

Vorrichtungen zum Bedienen einer Armatur einer Versorgungsleitung sind einerseits als mobile Bedienvorrichtungen bekannt, also als eine Vorrichtung die von Armatur zu Armatur mitgenommen werden kann, um die jeweilige Armatur zu bedienen. In einer einfachen manuellen Ausführungsform handelt es sich hierbei beispielsweise um einen sogenannten T-Schlüssel, der zum Bedienen der Armatur mit einem drehbaren Stellglied der Armatur verbunden wird, um den T-Schlüssel dann per Hand zu drehen. Auch motorgetriebene mobile Bedienvorrichtungen sind bekannt. Alternativ kann eine stationäre Bedienungsvorrichtung vorgesehen sein, die am Ort der Armatur verbleibt, hierbei aber wechsel- oder abnehmbar an der Armatur angeordnet sein kann, zum Beispiel zum Zweck der Montage und Demontage. Auch die stationäre Bedienvorrichtung kann manuell oder motorgetrieben bedienbar sein.

Das Dokument EP 2 716 948 A1 offenbart einen elektrischen Armaturenantrieb umfassend: einen Elektromotor und ein geschlossenes Planetengetriebe mit einer Eingangswelle, einem Planeten, einem tragenden Zentralrad und einer zweifach gelagerten Ausgangswelle mit einem Ausgangszentralrad. Das Getriebe ist zweistufig und monoplanetar, d. h. es hat einen zweistufigen Planetenträger und eine Anzahl von Planeten, die der ungeraden Anzahl von Planeten auf jeder Stufe entspricht, die paarweise im Träger montiert sind. Gleichzeitig sind die Rotationsachsen des Rotors, des Trägers und der Eingangs- und Ausgangswellen zueinander koaxial und fallen mit der Bewegungsachse der Ventilspindelwelle zusammen. Der Rotor ist fest an einer Eingangsverlängerung der Eingangswelle befestigt und mit dem Stator verbunden, der am Gehäusekragen befestigt ist. Die Eingangs- und Ausgangswellen und der Planetenträger sind hohl, mit Bohrungen für die Spindelwelle und die beweglichen Teile des Getriebes, die sich darin frei bewegen können.

### Zusammenfassung

Aufgabe der Erfindung ist es, eine Vorrichtung zum Bedienen einer Armatur in einer Versorgungsleitung sowie eine Anordnung anzugeben, die eine möglichst platzsparende und in unterschiedlichen Anwendungssituationen flexibel einsetzbare Bedienvorrichtungen für die Armatur bereitstellen.

Zur Lösung sind eine Vorrichtung zum Bedienen einer Armatur in einer Versorgungsleitung nach dem unabhängigen Anspruch 1 sowie eine Anordnung nach dem nebengeordneten Anspruch 9 geschaffen. Ausgestaltungen sind Gegenstand von abhängigen Unteransprüchen.

Nach einem Aspekt ist eine Vorrichtung zum Bedienen einer Armatur in einer Versorgungsleitung geschaffen, die Folgendes aufweist: eine Kopplungseinrichtung, die eingerichtet ist, mit einem drehbaren Stellglied einer Armatur in einer Versorgungsleitung verbunden zu werden, um zum Bedienen der Armatur eine drehende Antriebsbewegung auf das drehbare Stellglied zu übertragen; einen Antriebsmotor, der eingerichtet ist, die drehende Antriebsbewegung bereitzustellen; eine Getriebeeinrichtung, welches zum Übertragen der drehenden Antriebsbewegung antriebsseitig mit dem Antriebsmotor und abtriebsseitig mit der Kopplungseinrichtung verbunden ist; und eine innenliegende Aufnahme, aufweisend eine durch den Antriebsmotor hindurch verlaufende innenliegende Motoröffnung und eine durch die Getriebeeinrichtung hindurch verlaufende innenliegende Getriebeöffnung, welche zum Ausbilden der innenliegenden Aufnahme in einer Durchgangs-richtung der innenliegenden Aufnahme mit der innenliegenden Motoröffnung zumindest teilweise überlappt.

Nach einem weiteren Aspekt ist eine Anordnung mit einer Armatur, die in einer Versorgungsleitung angeordnet ist, und der Vorrichtung zum Bedienen der Armatur geschaffen, welche mit der Armatur verbunden ist.

Das Ausbilden der innenliegenden Aufnahme mit der innenliegenden Motoröffnung sowie der innenliegenden Getriebeöffnung ermöglicht eine raum- und platzsparende Ausbildung der Vorrichtung zum Bedienen der Armatur. Mit der innenliegenden Aufnahme ist ein Bau- oder Nutzraum bereitgestellt, in dem unterschiedliche Elemente oder Bauteile aufgenommen werden können, zum Beispiel zum manuellen Bedienen der Armatur. Aber auch eine steigende Spindel der Armatur kann in einer beispielhaften Ausgestaltung in die innenliegende Aufnahme hineinragen. Bauteile oder -komponente sowohl des Antriebsmotors wie auch der Getriebeeinrichtung sind zumindest teilweise um die jeweilige innenliegende Öffnung und somit um die Aufnahme herum angeordnet. Im Vergleich zu bekannten motorgetriebenen Bedienvorrichtungen ergibt sich so eine kompaktere Bauweise.

Mit der Aufnahme ist in einer Ausgestaltung eine Art Einführ- oder Einsteckkanal für eine manuelle Bedieneinrichtung bereitgestellt, sodass die manuelle Bedieneinrichtung zumindest mit einem Kopplungsabschnitt in die innenliegende Aufnahme eingeführt werden kann, bis hin zur Kopplung an das drehbare Stellglied der Armatur, dessen drehende Betätigung dem Bedienen der Armatur in der Versorgungsleitung dient.

Innenliegende Getriebeöffnung und innenliegende Motoröffnung können zum Ausbilden der innenliegenden Aufnahme im Wesentlichen vollständig überlappen, wobei die Öffnung in einem Beispiel eine im Wesentlichen gleiche Öffnungsfläche aufweisen können.

Der Antriebsmotor weist einen Außenläufermotor auf und die innenliegende Motoröffnung ist durch den Außenläufermotor hindurch gebildet. Beim Außenläufermotor ist üblicherweise der Stator innenliegend angeordnet, wohingegen der Rotor außen liegt und sich im Betrieb dreht. Stator und Rotor sind um die innenliegende Motoröffnung herum gebildet und stellen hiermit als Teil der Aufnahme den Durchgang für das Einführen der manuellen Bedieneinrichtung zur Verfügung.

Die innenliegende Motoröffnung kann in einer Motorhohlwelle des Antriebsmotors gebildet sein.

Die Getriebeeinrichtung kann ein Wellengetriebe aufweisen, und die innenliegende Getriebeöffnung kann durch das Wellengetriebe hindurch gebildet sein. Das Wellengetriebe ist um die innenliegende Getriebeöffnung herum durchgehend gebildet, wobei sich die Aufnahme entlang einer Mittelachse des Wellengetriebes erstrecken kann.

Die Kopplungseinrichtung kann ein Verbindungselement aufweisen, welches mit einer manuellen Bedieneinrichtung funktionell verbindbar ist, derart, die sich die manuelle Bedieneinrichtung nach dem Verbinden mit dem Verbindungselement in der Durchgangsrichtung in der innenliegenden Aufnahme mit der innenliegenden Motoröffnung und der innenliegenden Getriebeöffnung erstreckt, sei es abschnittsweise oder durch die innenliegende Aufnahme hindurch. Die Kopplungseinrichtung kann zum Beispiel ein Vierkantende aufweisen, auf welches die manuelle Bedieneinrichtung aufgesteckt werden kann.

Die Kopplungseinrichtung kann einen Durchbruch aufweisen, welcher in der Durchgangsrichtung zumindest teilweise mit der innenliegenden Aufnahme überlappt, wahlweise vollständig.

Die Kopplungseinrichtung mit dem Durchbruch kann eingerichtet sein, eine steigende Spindel der Armatur aufzunehmen, derart, dass die steigende Spindel beim Bedienen der Armatur zumindest abschnittsweise durch den Durchbruch hindurch in die innenliegende Aufnahme hinein und wahlweise aus dieser heraus verlagerbar ist.

Es kann eine Steuereinrichtung vorgesehen sein, die mit dem Antriebsmotor verbunden und eingerichtet ist, den Antriebsmotor zum Bedienen der Armatur Steuersignalen entsprechend anzusteuern, wobei die Steuereinrichtung um eine durch die Steuereinrichtung hindurch verlaufende innenliegende Steuereinrichtungsöffnung gebildet ist, die Teil der innenliegenden Aufnahme ist. Die Steuereinrichtung kann ergänzend eingerichtet sein, über eine Datenkommunikationsschnittstelle Daten zu empfangen und zu senden, beispielsweise Signaldaten, die eine Drehstellung beim Bedienen der Armatur anzeigen. Die Datenkommunikationsschnittstelle kann für eine drahtlose Datenkommunikation eingerichtet sein. Bauteile oder Baukomponenten der Steuereinrichtung können um die innenliegende Steuereinrichtungsöffnung herum angeordnet sein, welche Teil der Aufnahme ist. Hierbei kann vorgesehen sein, dass Teile oder Komponenten der Steuereinrichtung auf einer Leiterplatte angeordnet sind, die eine innenliegende Leiterplattenöffnung aufweist, durch welche hindurch sich die innenliegende Aufnahme erstreckt, sodass die innenliegende Leiterplattenöffnung Teil der Steuereinrichtungsöffnung ist.

Die innenliegende Aufnahme kann einen Aufnahmedurchmesser von wenigstens etwa 8 mm aufweisen, und die innenliegende Motoröffnung und die innenliegende Getriebeöffnung können jeweils einen Öffnungsdurchmesser aufweisen, welcher zumindest gleich dem Aufnahmedurchmesser ist. Alternativ kann der Aufnahmedurchmesser wenigstens etwa 10mm und in einer weiteren alternativen Ausgestaltung wenigstens etwa 15mm betragen. Neben der innenliegenden Motoröffnung und der innenliegenden Getriebeöffnung weist die innenliegende Steuereinrichtungsöffnung ebenso einen Öffnungsdurchmesser auf, der zumindest gleich dem Aufnahmedurchmesser ist, wenn die Steuereinrichtung mit der innenliegenden Steuereinrichtungsöffnung gebildet ist.

In alternativen Ausgestaltungen kann ein Bauteilabschnitt einer manuellen Bedieneinrichtung den Aufnahmedurchmesser der Aufnahme in eingestecktem Zustand im Wesentlichen vollständig erfassen oder ausfüllen, derart, dass die manuelle Bedieneinrichtung noch frei drehbar ist, oder es kann radial umlaufend ein Abstand zwischen der Oberfläche des Bauteilabschnitts und der Innenseite der Aufnahme ausgebildet sein, wodurch ebenso eine freie Drehbarkeit gegeben ist. Ähnlich kann dies zum Beispiel für eine steigende Spindel vorgesehen sein, die sich in die innenliegende Aufnahme hinein erstreckt.

Die Vorrichtung kann als stationäre Bedienvorrichtung ausgeführt sein, die eingerichtet ist, zum Bedienen an der Armatur stationär und wahlweise wechselbar angeordnet zu werden. Die stationäre Bedienvorrichtung ist an der Armatur oder einer zugeordneten Bedienstelle ortsfest angeordnet, aber wahlweise wechselbar, zum Beispiel zum Austausch oder zur Wartung. Im Unterschied hierzu sind an sich bekannte mobile Bedienvorrichtungen nicht ortsfest oder stationär an einer Armatur angeordnet, sondern werden zum Zweck eines Bedienvorgangs jeweils von Armatur zu Armatur verbracht.

In Verbindung mit der Anordnung mit der Armatur und der hiermit verbundenen Vorrichtung können weiterhin folgende Ausgestaltungen vorgesehen sein.

Die Armatur kann, alternativ zu einer oberirdisch verlegten Versorgungsleitung, in einer erdverlegten Versorgungsleitung angeordnet sein. Bei dieser Ausgestaltung kann die Armatur der Anordnung im Erdeinbau angeordnet oder verbaut sein. Die Armatur ist hierbei unterhalb der Erdoberfläche des Erdreichs angeordnet, in welchem die zugeordnete Versorgungsleitung verlegt ist.

Die Vorrichtung zum Bedienen der Armatur kann im Erdeinbau angeordnet sein. Nicht nur die Armatur, sondern auch die Vorrichtung zum Bedienen der Armatur ist bei dieser Ausgestaltung unterhalb der Erdoberfläche angeordnet. Alternativ kann vorgesehen sein, die Vorrichtung zum Bedienen der Armatur oberhalb der Erdoberfläche anzuordnen und diese mit der Armatur im Erdeinbau zu verbinden. Aber sowohl Vorrichtung zum Bedienen wie auch Armatur können bei einer erdverlegten Versorgungsleitung alternativ oberhalb der Erdoberfläche angeordnet sein, wenn die Armatur in einem Rohrleitungsabschnitt der Versorgungsleitung oberhalb der Erdoberfläche angeordnet ist.

Die Vorrichtung zum Bedienen der Armatur kann mit einem Aufnahmebauteil verbunden sein, welches im umgebenden Erdreich verdrehsicher aufgenommen ist. Mittels Kopplung an das Aufnahmebauteil, welches seinerseits im umgebenden Erdreich verdrehsicher aufgenommen oder fixiert ist, wird beim Bedienen der Armatur mittels des Antriebsmotors eine dem Verdrehen entgegenwirkende Haltekraft bereitgestellt.

Das Aufnahmebauteil kann als Teil einer Straßenkappeneinrichtung gebildet sein, zum Beispiel als Straßenkappe ausgeführt sein, mit der einen Zugang zu einer Bedienstelle der Armatur im Erdeinbau bereitgestellt oder gesichert wird. Die Vorrichtung zum Bedienen der Armatur kann mit einer Trageplatte verbunden sein, beispielsweise in einem Durchbruch der Trageplatte montiert sein, wahlweise lösbar. Die Tragplatte kann ihrerseits als Stützung oder Auflage für die Straßenkappe ausgebildet sein.

Die Vorrichtung zum Bedienen der Armatur kann als stationäre Bedienvorrichtung zum Bedienen an der Armatur stationär und wahlweise wechselbar angeordnet sein.

Die im Zusammenhang mit der Vorrichtung zum Bedienen der Armatur vorgesehenen Ausgestaltungen können bei der Anordnung entsprechend ausgebildet sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einer Armatur in einer Versorgungsleitung und einer Vorrichtung zum Bedienen der Armatur;
- Fig. 2: eine schematische Darstellung einer weiteren Anordnung mit einer Armatur in einer erdverlegten Versorgungsleitung und einer Vorrichtung zum Bedienen der Armatur, bei der eine Bedienstelle innerhalb einer Straßenkappe angeordnet ist;
- Fig. 3: eine schematische Darstellung einer anderen Anordnung mit einer Armatur mit einem alternativen Armaturentyp in einer erdverlegten Versorgungsleitung und einer Vorrichtung zum Bedienen der Armatur, bei der eine Bedienstelle innerhalb einer Straßenkappe angeordnet ist;
- Fig. 4: eine schematische Darstellung einer Vorrichtung zum Bedienen einer Armatur in einer Versorgungsleitung;
- Fig. 5: eine Schnittdarstellung der Vorrichtung aus Fig. 4;
- Fig. 6: eine Schnittdarstellung einer weiteren Vorrichtung zum Bedienen einer Armatur in einer Versorgungsleitung und
- Fig. 7: eine Schnittdarstellung einer anderen Vorrichtung zum Bedienen einer Armatur in einer Versorgungsleitung.

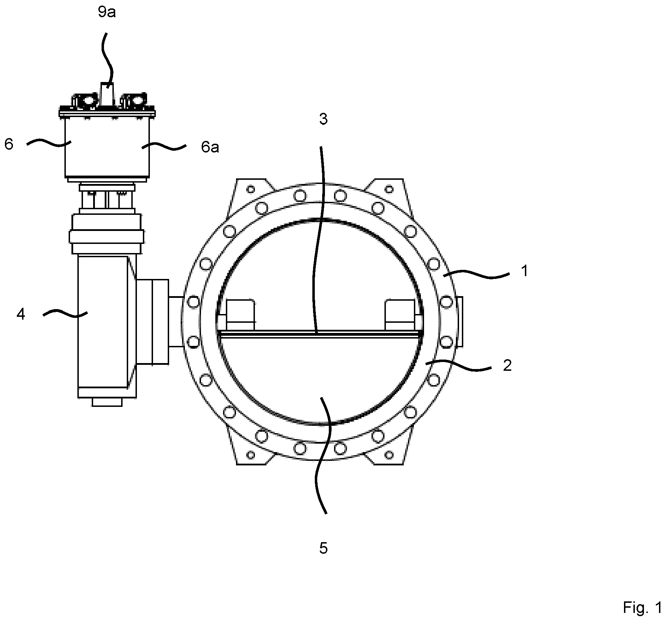

Fig. 1 zeigt eine schematische Darstellung einer Anordnung mit einer Versorgungsleitung 1, beispielsweise einer Rohrleitung zum Transportieren von Gas, Öl, Wasser oder Fernwärme. Die Versorgungsleitung 1 kann eine erdverlegte Versorgungsleitung oder eine oberirdisch (nicht erdverlegte) Versorgungsleitung sein. In einem Rohr 2 der Versorgungsleitung 1 ist ein Stellorgan 3 einer Armatur 4 angeordnet, zum Beispiel in einer Ausführung als Schwenkarmatur mit Getriebe. Mittels Drehen eines drehbaren Stellglieds der Armatur 4 wird das Stellorgan 3 der Armatur 4 so im Rohr 2 platziert (gedreht), dass der Durchfluss durch eine Öffnung 5 im Rohr 2 in unterschiedlichem Umfang ermöglicht ist.

Um dies zu bewirken, ist an der Armatur 4 eine Vorrichtung zum Bedienen 6 (Bedienvorrichtung) stationär angeordnet, mit der eine drehende Antriebsbewegung bereitgestellt wird, um diese auf das drehbare Stellglied der Armatur 4 zu übertragen und so das Stellorgan 3 einzustellen. Die Anordnung mit der Armatur 4 und der Vorrichtung zum Bedienen 6 kann im beispielhaften Fall einer erdverlegten Versorgungsleitung im Erdeinbau vorgesehen sein. Alternativ kann zumindest die Vorrichtung zum Bedienen 6 der Armatur 4 oberhalb der Erdoberfläche angeordnet sein, auch im Fall der erdverlegten Versorgungsleitung, zum Beispiel in einem Schachtbauwerk. Die Vorrichtungen zum Bedienen 6 der Armatur 4 weist ein Au-βengehäuse 6a auf.

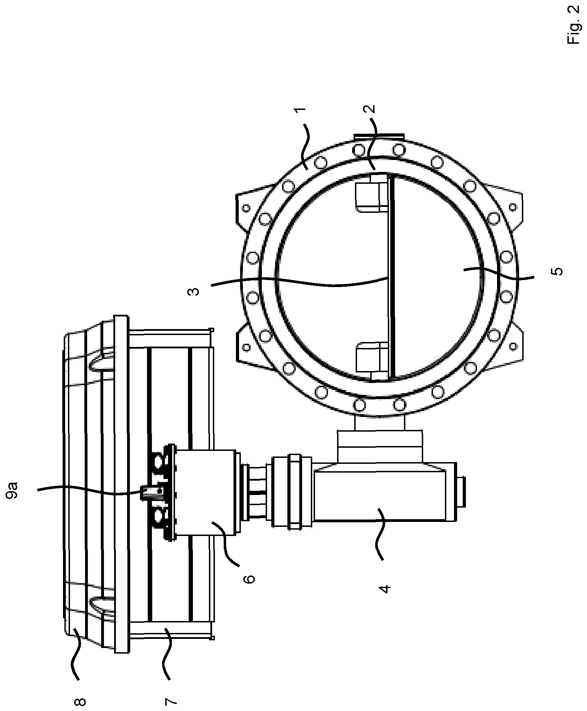

Fig. 2 zeigt eine Anordnung mit einer erdverlegten Versorgungsleitung 1 sowie der zugeordneten Armatur 4. Die Vorrichtung zum Bedienen 6 der Armatur 4 ist innerhalb einer Straßenkappe 7 im Erdreich angeordnet. Die Vorrichtung zum Bedienen 6 kann - alternativ zur Ausgestaltung in Fig. 2 - mit der Straßenkappe 7 drehfest verbunden sein, welche ihrerseits im Erdreich drehsicher aufgenommen ist und so ein beim Bedienen der Armatur 4 auftretendes Gegendrehmoment aufnehmen kann. Bei der Ausführung in Fig. 2 ist die Vorrichtung zum Bedienen 6 auf die Armatur aufgeflanscht. Das Gegendrehmoment wird über die Armatur 4 aufgenommen.

Um den Zugang zur Vorrichtung zum Bedienen 6 und somit die Bedienstelle der Armatur 4 freizugeben, kann eine Deckel 8, der auf der Straßenkappe 7 angeordnet ist, geöffnet werden, wie dieses als solches bekannt ist. Die mittels der Vorrichtung zum Bedienen 6 bereitgestellte Antriebsbewegung wird über eine Kopplung 9 auf die Armatur 4 übertragen.

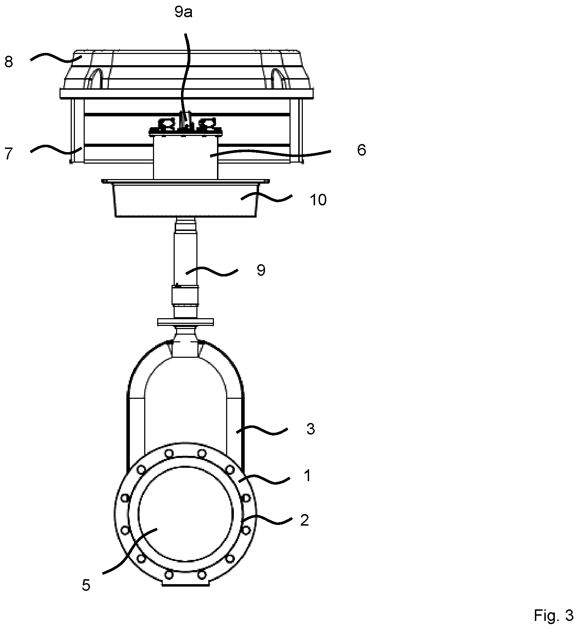

Fig. 3 zeigt eine schematische Darstellung einer anderen Anordnung mit der Armatur 4 mit einem als horizontal verlagerbarer Schieber ausgeführten Stellorgan 3 in einer erdverlegten Versorgungsleitung 1 und der Vorrichtung zum Bedienen 6 der Armatur 4, bei der eine Bedienstelle innerhalb einer Straßenkappe 7 angeordnet ist. Die Vorrichtung zum Bedienen 6 der Armatur 4 ist an einer Tragplatte 7a aufgenommen, die unterhalb der Straßenkappe 7 und des Deckels 8 angeordnet und verdrehsicher im Erdreich aufgenommen ist. Hierdurch können beim Betätigen der Armatur 4 mittels der Vorrichtung zum Bedienen 6 auftretende Kräfte von der Tragplatte 7a aufgenommen werden.

Hierbei ist im gezeigten Ausführungsbeispiel bei der Vorrichtung zum Bedienen 6 ein oben überstehendes Kopplungsbauteil 9a als Teil einer manuellen Bedienung vorgesehen, welches zum Koppeln mit einem manuellen Drehschlüssel (nicht dargestellt) zum Beispiel einen Vierkant aufweist.

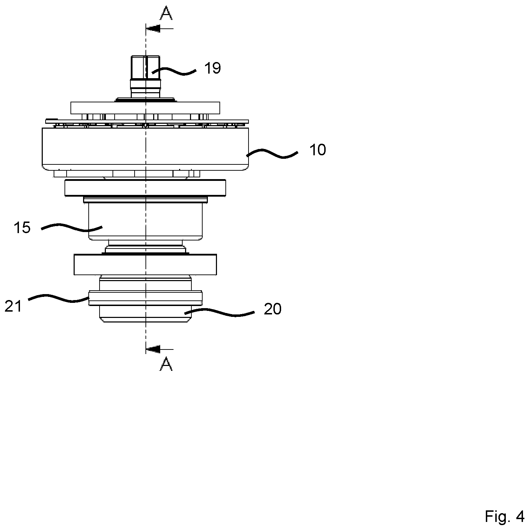

Die Fig. 4 bis 7 zeigen für verschiedenen Ausgestaltungen von Komponenten der Vorrichtung zum Bedienen 6 der Armatur 4 in Frontansicht sowie im Schnitt A-A, wobei das Gehäuse 6a weggelassen ist.

Als Antriebseinrichtung ist ein Antriebsmotor 10 vorgesehen, der erfindungsgemäß und bei den gezeigten Ausführungsformen als ein Außenläufermotor mit außenliegendem Rotor 11 sowie innenliegendem Stator 12 gebildet ist. Der Antriebsmotor 10 weist eine innenliegende Motoröffnung 13 auf, die in einer Motorhohlwelle 14 gebildet ist.

Unterhalb des Antriebsmotors 10 ist eine Getriebeeinrichtung 15 angeordnet, die bei dem gezeigten Ausführungsbeispiel mit einem Wellengetriebe 16 gebildet ist. Die Getriebeeinrichtung 15 weist eine innenliegende Getriebeöffnung 17 auf, die zusammen mit der innenliegenden Motoröffnung 13 Teil einer (innenliegenden) Aufnahme 18 ist, in die zum Beispiel ein Bauteil 19 einer manuellen Bedieneinrichtung einsteckbar ist. Das lösbar oder nicht lösbar angeordnete Bauteil 19 dient dazu, wahlweise in Verbindung mit einer Bedieneinrichtung (zum Beispiel ein T-Schlüssel), die Armatur 4 per Handdrehung bedienen können, also über ein Kopplungsbauteil 20, welches mittels Drehlagerung 20a drehbar gelagert und welchem eine umlaufende Dichtung 21 zugeordnet ist, eine manuell erzeugte Kraft auf das Drehen des Stellglieds der Armatur 4 zu übertragen. Über das Kopplungsbauteil 20 wird in gleicher Weise die mittels Antriebsmotor 10 bereitgestellte Drehbewegung übertragen. Insbesondere im Fall einer nicht lösbaren Montage kann das Bauteil 19 als Teil einer Handbedienung ausgebildet sein, um so beispielweise das Kopplungsbauteil 9a bereitzustellen (vgl. auch Fig. 1), welches zum manuellen Bedienen zum Beispiel mit einem Drehschlüssel (beispielweise T-Schlüssel) verbindbar ist.

Die Vorrichtung zum Bedienen 6 der Armatur 4 stellt im gezeigten Beispiel somit beides zur Verfügung, nämlich einen maschinellen oder motorgetriebenen Antrieb zum Bedienen sowie die Möglichkeit zum Handbetrieb. Sowohl Antriebsmotor 10 wie auch Getriebeeinrichtung 15 sind platzsparend um die innenliegende Aufnahme 18 herum ausgebildet. Über eine Koppelstelle 22 (zum Beispiel Ausnehmung) am Kopplungsbauteil 20 ist dieses mit dem drehenden Stellglied (nicht dargestellt) der Armatur 4 verbindbar, um so deren manuelle oder maschinelle Bedienung zu bewirken.

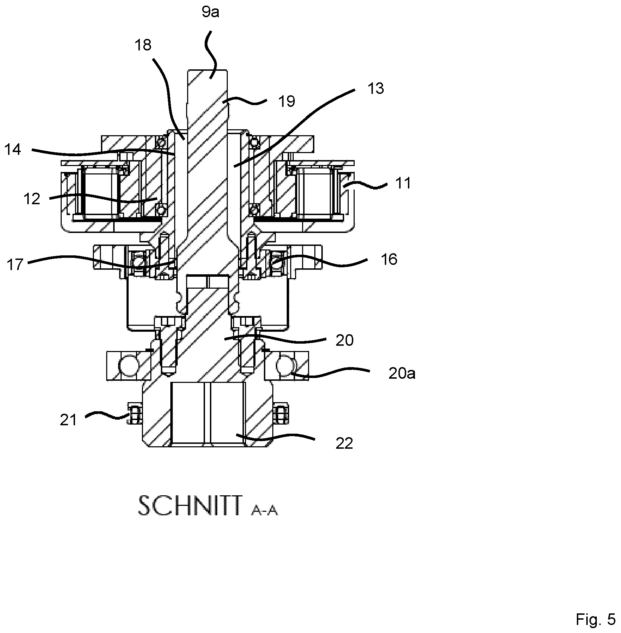

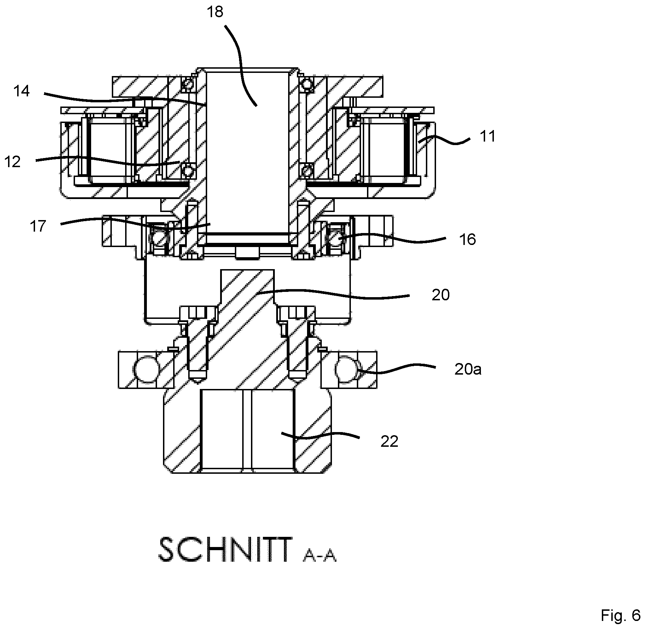

Fig. 6 zeigt eine weitere Darstellung des Ausführungsbeispiel aus Fig. 5, wobei das Bauteil 19 von dem Kopplungsbauteil 20 gelöst und aus der innenliegenden Aufnahme 18 entfernt ist. Hierauf kann zum Beispiel eine manuelle Bedieneinrichtung (wie Drehschlüssel) in die innenliegende Aufnahme 18 eingeführt und mit dem Kopplungsbauteil 20 direkt verbunden werden.

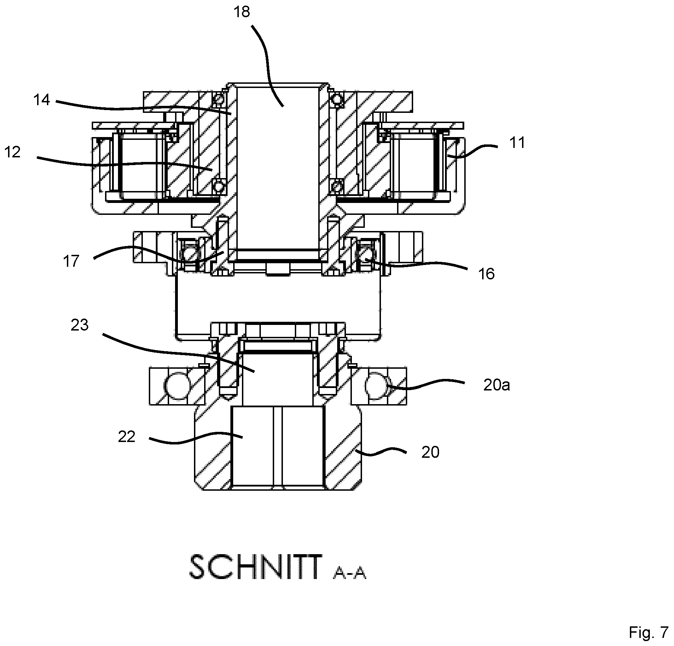

Bei dem Ausführungsbeispiel in Fig. 7 ist das Kopplungsbauteil 20 mit einem Durchgang 23 in vertikaler Richtung gebildet, welcher in vertikaler Durchgangsrichtung mit der innenliegenden Aufnahme 18 überlappt, insbesondere hiermit zentriert ist. Hierdurch kann beispielweise eine steigende Spindel (nicht dargestellt) der Armatur 4 im Betrieb beim Bedienen der Armatur 4 durch den Durchgang 23 hindurch in die innenliegende Aufnahme 18 gelangen. Hierbei erfolgt die Übertragung der Drehbewegung zum Bedienen der Armatur 4 mit steigender Spindel wieder über das Kopplungsbauteil 20, zum Beispiel auf eine der steigenden Spindel zugeordneten Spindelmutter, die hierzu mit dem Kopplungsbauteil 20 verbunden wird, um so die vom Antriebsmotors 10 über die Getriebeeinrichtung 15 bereitgestellte Antriebsbewegung zu übertragen.

In unterschiedlichen Ausgestaltungen kann die Vorrichtung zum Bedienen 6 der Armatur 4 in Versorgungsleitungen mit einer Mindestnennweite von DN40 ausgebildet sein, alternativ für eine Armatur für eine Versorgungsleitung mit einer Mindestnennweite DN60 oder einer Mindestnennweite von DN80.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Vorrichtung zum Bedienen einer Armatur in einer Versorgungsleitung, mit:
- einer Kopplungseinrichtung (20; 22), die eingerichtet ist, mit einem drehbaren Stellglied einer Armatur (4) in einer Versorgungsleitung (1) verbunden zu werden, um zum Bedienen der Armatur (4) eine drehende Antriebsbewegung auf das drehbare Stellglied zu übertragen;
- einem Antriebsmotor (10), der eingerichtet ist, die drehende Antriebsbewegung bereitzustellen;
- einer Getriebeeinrichtung (15), welches zum Übertragen der drehenden Antriebsbewegung antriebsseitig mit dem Antriebsmotor (10) und abtriebsseitig mit der Kopplungseinrichtung (20) verbunden ist; und
- einer innenliegenden Aufnahme (18), aufweisend
- eine durch den Antriebsmotor (10) hindurch verlaufende innenliegende Motoröffnung (13) und
- eine durch die Getriebeeinrichtung (15) hindurch verlaufende innenliegende Getriebeöffnung (17), welche zum Ausbilden der innenliegenden Aufnahme (18) in einer Durchgangsrichtung der innenliegenden Aufnahme (18) mit der innenliegenden Motoröffnung (13) zumindest teilweise überlappt,
dadurch ge k e n n z e ich n e t, dass der Antriebsmotor (10) einen Außenläufermotor aufweist und die innenliegende Motoröffnung (13) durch den Außenläufermotor hindurch gebildet ist.

2. Vorrichtung nach Anspruch 1, **dadurch gekennzeichnet, dass** die innenliegende Motoröffnung (13) in einer Motorhohlwelle (14) des Antriebsmotors (10) gebildet ist.

3. Vorrichtung nach mindestens einem der vorangehenden Ansprüche, **dadurch gekennzeichnet, dass** die Getriebeeinrichtung (15) ein Wellengetriebe (16) aufweist und die innenliegende Getriebeöffnung (17) durch das Wellengetriebe (16) hindurch gebildet ist.

4. Vorrichtung nach mindestens einem der vorangehenden Ansprüche, **dadurch gekennzeichnet, dass** die Kopplungseinrichtung (20; 22) ein Verbindungselement (19) aufweist, welches mit einer manuellen Bedieneinrichtung funktionell verbindbar ist, derart, die sich die manuelle Bedieneinrichtung nach dem Verbinden mit dem Verbindungselement (19) in der Durchgangsrichtung in der innenliegenden Aufnahme (18) mit der innenliegenden Motoröffnung (13) und der innenliegenden Getriebeöffnung (17) erstreckt.

5. Vorrichtung nach mindestens einem der vorangehenden Ansprüche, **dadurch gekennzeichnet, dass** die Kopplungseinrichtung (20; 22) einen Durchbruch (23) aufweist, welcher in der Durchgangsrichtung zumindest teilweise mit der innenliegenden Aufnahme (18) überlappt.

6. Vorrichtung nach mindestens einem der vorangehenden Ansprüche, **dadurch gekennzeichnet, dass** eine Steuereinrichtung vorgesehen ist, die mit dem Antriebsmotor (10) verbunden und eingerichtet ist, den Antriebsmotor (10) zum Bedienen der Armatur (4) Steuersignalen entsprechend anzusteuern, wobei die Steuereinrichtung um eine durch die Steuereinrichtung hindurch verlaufende innenliegende Steuereinrichtungsöffnung gebildet ist, die Teil der innenliegenden Aufnahme (18) ist.

7. Vorrichtung nach mindestens einem der vorangehenden Ansprüche, **dadurch gekennzeichnet, dass** die innenliegenden Aufnahme (18) einen Aufnahmedurchmesser von wenigstens etwa 8 mm aufweist und die innenliegende Motoröffnung (13) und die innenliegende Getriebeöffnung (17) jeweils einen Öffnungsdurchmesser aufweisen, welcher zumindest gleich dem Aufnahmedurchmesser ist.

8. Vorrichtung nach mindestens einem der vorangehenden Ansprüche, ausgeführt als stationäre Bedienvorrichtung, die eingerichtet ist, zum Bedienen an der Armatur (4) stationär angeordnet zu werden.

9. Anordnung, mit
- einer Armatur (4), die in einer Versorgungsleitung (2) angeordnet ist; und
- einer Vorrichtung zum Bedienen (6) der Armatur (4), die mit der Armatur (4) verbunden und gemäß mindestens einem der vorangehenden Ansprüche ausgebildet ist.

10. Anordnung nach Anspruch 9, **dadurch gekennzeichnet, dass** die Armatur (4) geeignet ist, in einer erdverlegten Versorgungsleitung (2) angeordnet zu werden.

11. Anordnung nach Anspruch 10, **dadurch gekennzeichnet, dass** die Vorrichtung zum Bedienen (6) der Armatur (4) geeignet ist, im Erdeinbau angeordnet zu werden.

12. Anordnung nach Anspruch 10 oder 11, **dadurch gekennzeichnet, dass** die Vorrichtung zum Bedienen (6) der Armatur (4) mit einem Aufnahmebauteil (7; 10) verbunden ist, welches im umgebenden Erdreich verdrehsicher aufgenommen werden kann.

13. Anordnung nach mindestens einem der Ansprüche 9 bis 12, **dadurch gekennzeichnet, dass** die Armatur (4) eine steigende Spindel aufweist, die beim Bedienen der Armatur (4) durch einen Durchbruch (23) der Kopplungseinrichtung (20; 22) hindurch, welcher zumindest teilweise mit der innenliegenden Aufnahme (18) überlappt, zumindest abschnittsweise in die innenliegende Aufnahme (18) hinein verlagerbar ist.

14. Anordnung nach mindestens einem der Ansprüche 9 bis 13, dadurch **gekenn-zeichnet**, dass die Vorrichtung zum Bedienen (6) der Armatur (4) als stationäre Bedienvorrichtung zum Bedienen an der Armatur (4) stationär und wechselbar angeordnet ist.

## Claims

1. An apparatus for operating a fitting in a supply line, comprising:
- a coupling device (20; 22) which is configured to be connected to a rotatable actuator of a fitting (4) in a supply line (1) in order to transmit a rotary drive movement to the rotatable actuator for operating the fitting (4);
- a drive motor (10) which is configured to provide the rotary drive movement;
- a transmission device (15) which is connected on the drive side to the drive motor (10) and on the output side to the coupling device (20) in order to transmit the rotary drive movement; and
- an internal receptacle (18) having
- an internal motor opening (13) extending through the drive motor (10) and
- an internal transmission opening (17) extending through the transmission device (15), which transmission opening at least partially overlaps the internal motor opening (13) in a direction of passage of the internal receptacle (18) to form the internal receptacle (18),
**characterized in that** the drive motor (10) comprises an external rotor motor and the internal motor opening (13) is formed through the external rotor motor.

2. The apparatus according to Claim 1, **characterized in that** the internal motor opening (13) is formed in a hollow motor shaft (14) of the drive motor (10).

3. The apparatus according to at least one of the preceding claims, **characterized in that** the transmission device (15) comprises a shaft transmission (16) and the internal transmission opening (17) is formed through the shaft transmission (16).

4. The apparatus according to at least one of the preceding claims, **characterized in that** the coupling device (20; 22) comprises a connecting element (19) which can be functionally connected to a manual operating device such that the manual operating device, after being connected to the connecting element (19), extends in the direction of passage in the internal receptacle (18) having the internal motor opening (13) and the internal transmission opening (17).

5. The apparatus according to at least one of the preceding claims, **characterized in that** the coupling device (20; 22) comprises a passage (23) which at least partially overlaps with the internal receptacle (18) in the direction of passage.

6. The apparatus according to at least one of the preceding claims, **characterized in that** a control device is provided, which is connected to the drive motor (10) and configured to control the drive motor (10) for operating the fitting (4) in accordance with control signals, the control device being formed around an internal control device opening extending through the control device and forming part of the internal receptacle (18).

7. The apparatus according to at least one of the preceding claims, **characterized in that** the internal receptacle (18) has a receptacle diameter of at least approximately 8 mm and the internal motor opening (13) and the internal transmission opening (17) each have an opening diameter which is at least equal to the receptacle diameter.

8. The apparatus according to at least one of the preceding claims, designed as a stationary operating apparatus which is configured to be arranged in a stationary manner on the fitting (4) for operating.

9. An arrangement, comprising
- a fitting (4) which is arranged in a supply line (2); and
- an apparatus for operating (6) the fitting (4), which apparatus is connected to the fitting (4) and is configured according to at least one of the preceding claims.

10. The arrangement according to Claim 9, **characterized in that** the fitting (4) is suitable to be arranged in a buried supply line (2).

11. The arrangement according to Claim 10, **characterized in that** the apparatus for operating (6) the fitting (4) is suitable to be arranged by underground installation.

12. The arrangement according to Claim 10 or 11, **characterized in that** the apparatus for operating (6) the fitting (4) is connected to a receiving component (7; 10) which can be received in the surrounding ground in a rotationally fixed manner.

13. The arrangement according to at least one of Claims 9 to 12, **characterized in that** the fitting (4) comprises a rising spindle which, when the fitting (4) is operated, can be displaced at least in portions into the internal receptacle (18) through a passage (23) in the coupling device (20; 22) which passage at least partially overlaps with the internal receptacle (18).

14. The arrangement according to at least one of Claims 9 to 13, **characterized in that** the apparatus for operating (6) the fitting (4) is arranged on the fitting (4) in a stationary and exchangeable manner as a stationary operating apparatus for operating.

## Revendications

1. Dispositif de manoeuvre d'une robinetterie dans une conduite d'alimentation, doté :
- d'un système de couplage (20; 22), qui est configuré pour être assemblé avec un actionneur rotatif d'une robinetterie (4) dans une conduite d'alimentation (1) pour, aux fins de la manoeuvre de la robinetterie (4), transmettre un déplacement en entrainement rotatif sur l'actionneur rotatif ;
- un moteur d'entraînement (10), qui est configuré pour mettre à disposition le déplacement en entrainement rotatif ;
- un système de transmission (15), lequel pour transmettre le déplacement en entrainement rotatif est relié côté menant avec le moteur d'entraînement (10) et côté mené avec le système de couplage (20) ; et
- un logement (18) interne, comportant
- un orifice interne (13) du moteur, s'écoulant à travers le moteur d'entraînement (10) et
- un orifice interne (17) de la transmission, s'écoulant à travers le système de transmission (15), lequel pour constituer le logement (18) interne, se chevauche au moins partiellement dans une direction de passage du logement (18) interne avec l' orifice (13) du moteur,
**caractérisé en ce que** le moteur d'entraînement (10) comporte un moteur à induit extérieur et l'orifice interne (13) du moteur est constitué à travers l'l'induit extérieur.

2. Dispositif selon la revendication 1, **caractérisé en ce que** l' orifice interne (13) du moteur est constitué dans un arbre creux (14) de moteur du moteur d'entraînement (10).

3. Dispositif selon au moins l'une quelconque des revendications précédentes, **caractérisé en ce que** le système de transmission (15) comporte une transmission à arbre (16) et l' orifice interne (17) de la transmission est constitué à travers la transmission à arbre (16).

4. Dispositif selon au moins l'une quelconque des revendications précédentes, **caractérisé en ce que** le système de couplage (20; 22) comporte un élément de liaison (19), lequel est susceptible d'être relié fonctionnellement avec un système de manoeuvre manuel, de telle sorte qu'après la liaison avec l'élément de liaison (19), le système de manoeuvre manuel s'étende dans la direction de passage dans le logement (18) interne pourvu de l'orifice interne (13) du moteur et de l'orifice interne (17) de la transmission.

5. Dispositif selon au moins l'une quelconque des revendications précédentes, **caractérisé en ce que** le système de couplage (20; 22) comporte un ajour (23), lequel dans la direction de passage se chevauche au moins partiellement avec le logement (18) interne.

6. Dispositif selon au moins l'une quelconque des revendications précédentes, **caractérisé en ce qu'**il est prévu un système de commande, qui est relié avec le moteur d'entrainement (10) et qui est configuré pour actionner le moteur d'entraînement (10), pour la manoeuvre de la robinetterie (4) en fonction de signaux de commande, le système de commande étant constitué par un orifice interne du système de commande s'écoulant à travers le système de commande, qui est une partie du logement (18) interne.

7. Dispositif selon au moins l'une quelconque des revendications précédentes, **caractérisé en ce que** le logement (18) interne présente un diamètre de logement d'au moins 8 mm environ et l' orifice interne (13) du moteur et l' orifice (17) interne de la transmission présentent chacun un diamètre d'orifice lequel est au moins identique au diamètre du logement.

8. Dispositif selon au moins l'une quelconque des revendications précédentes, réalisé sous la forme d'un dispositif de manoeuvre stationnaire, qui est configuré pour être placé de manière stationnaire sur la robinetterie (4) pour la manoeuvre.

9. Ensemble doté
- d'une robinetterie (4), qui est placée dans une conduite d'alimentation (2) ; et
- d'un dispositif de manoeuvre (6) de la robinetterie (4), qui est relié avec la robinetterie (4) et qui est conçu selon au moins selon l'une quelconque des revendications précédentes.

10. Ensemble selon la revendication 9, **caractérisé en ce que** la robinetterie (4) est apte à être placée dans une conduite d'alimentation (2) enterrée.

11. Ensemble selon la revendication 10, **caractérisé en ce que** le dispositif de manoeuvre (6) de la robinetterie (4) est apte à être placé en installation enterrée.

12. Ensemble selon la revendication 10 ou 11, **caractérisé en ce que** le dispositif de manoeuvre (6) de la robinetterie (4) est relié avec un composant de logement (7 ; 10), lequel peut être logé dans le terrain environnant de manière bloquée en rotation.

13. Ensemble selon au moins l'une quelconque des revendications 9 à 12, **caractérisé en ce que** la robinetterie (4) comporte une broche montante, qui lors de la manoeuvre de la robinetterie (4) est déplaçable au moins par segments à l'intérieur du logement (18) interne à travers un ajour (23) du système de couplage (20; 22), qui se chevauche au moins en partie avec le logement (18) interne.

14. Ensemble selon au moins l'une quelconque des revendications 9 à 13, **caractérisé en ce que** le dispositif de manoeuvre (6) de la robinetterie (4) est placé pour la manoeuvre en tant que dispositif de manoeuvre stationnaire de manière stationnaire et interchangeable sur la robinetterie (4).
